Europäisches Patentamt

European Patent Office

Office européen des brevets

(19)

(11) Numéro de publication : **0 091 632**
**B1**

# (12) FASCICULE DE BREVET EUROPÉEN

(45) Date de publication du fascicule du brevet :
16.04.86

(21) Numéro de dépôt : 83103276.8

(22) Date de dépôt : 05.04.83

(51) Int. Cl.⁴ : **G 02 B   6/44**

(54) **Dispositif de jonction des extrémités de deux câbles sous-marins à fibres optiques et procédé de fabrication de celui-ci.**

(30) Priorité : 08.04.82 FR 8206152

(43) Date de publication de la demande :
19.10.83 Bulletin 83/42

(45) Mention de la délivrance du brevet :
16.04.86 Bulletin 86/16

(84) Etats contractants désignés :
DE FR GB IT

(56) Documents cités :
DE-A- 3 006 131
GB-A- 1 580 061
GB-A- 2 025 650
GB-A- 2 030 723
US-A- 4 107 451
US-A- 4 227 770
PATENTS ABSTRACTS OF JAPAN, vol. 4, no. 188, 24 décembre 1980, page 1 P 42
JOURNAL OF OPTICAL COMMUNICATIONS, vol. 1, no. 2, novembre 1980, pages 58-63, Berlin, DE. H. HORIMA et al.: "Characteristics of jelly-filled optical cables"

(73) Titulaire : **LES CABLES DE LYON Société anonyme dite:**
**170 quai de Clichy**
**F-92111 Clichy Cedex (FR)**

(72) Inventeur : **Guazzo, Lucien**
**77, rue de la Paix**
**F-62100 Calais (FR)**

(74) Mandataire : **Weinmiller, Jürgen et al**
**Zeppelinstrasse 63**
**D-8000 München 80 (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif de jonction des extrémités de deux câbles sous-marins à fibres optiques comprenant chacun des fibres optiques logées dans un cœur optique, sur lequel vient s'enrouler hélicoïdalement une voûte de fils d'acier, un tube en métal conducteur étant rétreint sur la voûte, et une gaine isolante ; ce dispositif comprend à chaque extrémité de câble :

une pièce d'ancrage au moins en partie en métal de résistance mécanique élevée, percée du côté tourné vers l'autre extrémité de câble d'un alésage conique pour le passage et le logement des extrémités de fils d'acier formant voûte, et du côté opposé, d'un alésage cylindrique pour le logement du tube en métal conducteur ;

une bague conique d'épanouissement et de maintien des fils d'acier formant voûte, percée d'un canal axial pour le passage du cœur optique ;

un remplissage en résine synthétique durcissable occupant le volume libre entre la surface interne de la pièce d'ancrage et la surface externe de la bague conique, autour des extrémités des fils d'acier formant voûte.

Elle concerne aussi un procédé de fabrication d'un tel dispositif, dans lequel :

on élimine dans la zone de jonction sur une longueur notablement supérieure à celle désirée pour ledit dispositif, le cœur optique, les fils d'acier formant voûte, le tube de cuivre rétreint, la gaine isolante, en laissant à nu les fibres optiques ;

on engage successivement sur les extrémités de chaque câble, les manchons extérieurs, le tube intérieur sur l'extrémité d'un câble et le tube extérieur sur l'extrémité de l'autre câble, puis les pièces d'ancrage ;

on coupe les fils d'acier formant voûte, le tube de cuivre rétreint, la gaine isolante, à la longueur nécessaire à celle désirée pour le dispositif ;

on introduit dans l'alésage conique des pièces d'ancrages, une certaine quantité de résine synthétique durcissable et on épanouit les extrémités des fils d'acier formant voûte à l'intérieur dudit alésage conique.

on introduit les pièces coniques d'épanouissement des fils d'acier de la voûte à l'intérieur des pièces d'ancrage, on réalise le remplissage de la totalité du volume compris entre les extrémités des fils d'acier et les pièces coniques d'épanouissement avec la résine synthétique puis on fait durcir la résine.

Au cours de la pose d'une ligne de transmission sous-marine, il est inévitable d'avoir à réunir deux extrémités de câbles, en particulier au cours d'une réparation en un point où un câble a été endommagé.

Les câbles sous-marins à fibres optiques comportent généralement : une âme comprenant les fibres optiques (placées dans les tubes de matériau plastique remplis de matière visqueuse ou dans des sillons hélicoïdaux sur le pourtour d'un jonc métallique ou en matière plastique) ; une voûte formée de fils d'acier enroulés en hélice et recouverte d'un tube de métal conducteur ductile (cuivre ou aluminium) soudé longitudinalement et rétreint sur la voûte de fils d'acier ; une gaine isolante en matière thermoplastique, telle que le polyéthylène.

La jonction de deux extrémités de câbles ainsi constitués est difficile car il faut que cette jonction assure trois fonctions distinctes :

le raccordement bout à bout des fibres optiques des deux câbles, en laissant une surlongueur suffisante pour éviter la rupture des fibres sous l'effet d'une traction intempestive,

la continuité mécanique des voûtes porteuses qui garantissent la tenue en traction du câble,

l'étanchéité à l'eau même dans le cas des pressions élevées régnant dans les fonds sous-marins.

Selon des suggestions faites antérieurement, de tels dispositifs ont déjà été proposés par la Demanderesse. Ces dispositifs comportent chacun : des pièces d'ancrage sur lesquelles sont fixées les extrémités de câbles ; un mandrin sur lequel s'enroule la surlongueur de fibres optiques, un tube conteneur entourant le mandrin et réalisant la liaison mécanique des pièces d'ancrage. Cette disposition oblige donc l'opérateur à réaliser d'abord le raccordement des fibres optiques et ensuite le raccordement mécanique des extrémités de câbles. Ceci présente un risque de casse évident.

La présente invention permet de remédier à cet inconvénient en proposant un dispositif de jonction qui permet de réaliser d'abord le raccordement mécanique des extrémités de câbles et ensuite le raccordement des fibres optiques sans risque de rupture des fibres par inadvertance ou fausse manœuvre.

L'invention a pour but également de procurer un dispositif et un procédé de jonction simples pour autoriser un enroulement de la jonction sur un davier procurant une bonne résistance mécanique, une bonne étanchéité à l'eau à l'aide d'un produit hydrophobe et une bonne isolation électrique par des gaines en matière thermoplastique.

Le dispositif est caractérisé en ce qu'au moins une pièce d'ancrage possède des lumières pour le passage des fibres optiques et en ce qu'il comprend également autour des pièces d'ancrage :

un tube interne en métal de résistance mécanique élevée relié aux pièces d'ancrage et percé en sa partie centrale par des lumières ;

dans chaque lumière du tube interne, un fil support sur lequel se fixe un manchon de soudure raccordant une à une les fibres optiques ;

un tube externe recouvrant le tube interne.

Avantageusement l'espace laissé libre à l'intérieur du tube externe est rempli d'un produit visqueux, de préférence du polyisobutylène.

De préférence le tube intérieur est muni d'un orifice permettant le remplissage, et d'un autre orifice permettant la mise à l'air libre.

Selon une autre caractéristique un moulage de fermeture en matière thermoplastique assure la liaison des deux gaines isolantes.

Il comprend en outre de préférence deux manchons extérieurs en matière synthétique.

Le procédé de fabrication d'un tel dispositif est caractérisé en ce que :

on passe toutes les fibres optiques au travers des différentes lumières pratiquées dans une pièce d'ancrage ;

on réalise la jonction mécanique en ramenant le tube interne sur les deux pièces d'ancrage et en le vissant au moins à une desdites pièces ;

on passe toutes les fibres optiques au travers des différentes lumières pratiquées dans la partie centrale du tube interne ;

on soude les fibres optiques une à une et on protège les soudures par des manchons puis on fixe ces manchons sur des fils support (26) par des rubans ;

on place chaque fil support dans des rainures extérieures du tube interne, chaque manchon se trouvant ainsi placé dans une lumière du tube interne ;

on ramène le tube externe jusqu'au niveau des orifices de remplissage et de mise à l'air libre pratiqués dans le tube interne ;

après un remplissage de l'espace laissé libre à l'intérieur du tube externe, on met définitivement en place ledit tube externe et on l'immobilise.

Avantageusement ledit remplissage se fait à l'aide d'un produit visqueux, de préférence du polyisobutylène.

De préférence on raccorde les deux gaines isolantes par un moulage thermoplastique.

Selon une autre caractéristique on recouvre l'ensemble du dispositif par deux manchons extérieurs en matière synthétique.

Il est décrit ci-après à titre d'exemple et en référence aux figures du dessin annexé, un dispositif de jonction selon l'invention dans lequel chaque câble comprend un conducteur de retour recouvert par une gaine de protection, et son procédé de fabrication.

La figure 1 représente en coupe partielle, l'ensemble du dispositif une fois la jonction terminée.

La figure 2 représente en élévation à l'échelle 1, une extrémité d'un câble avec ses différents composants.

La figure 3 représente la mise en place des pièces d'ancrage.

La figure 4 représente le raccordement mécanique des pièces d'ancrage et le raccordement des fibres optiques.

La figure 5 représente l'opération de remplissage.

La figure 6 représente la jonction terminée.

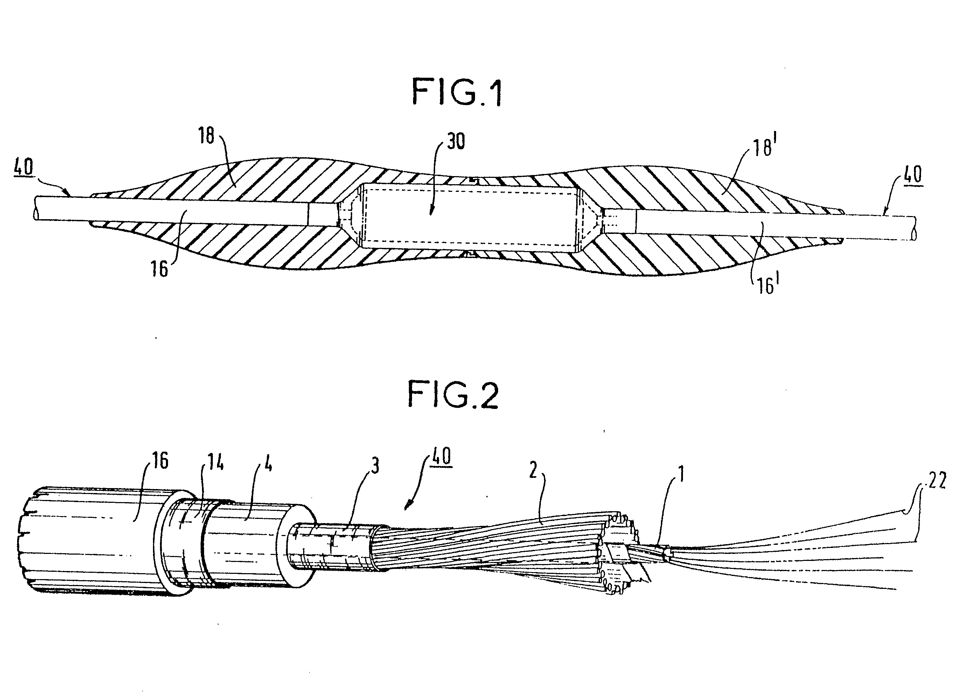

Dans la figure 1, on voit les deux manchons 18, 18' recouvrant totalement le dispositif de jonction 30.

La figure 2 montre une extrémité d'un câble 40, composée de fibres optiques 22, d'un cœur optique 1, d'une voûte de fils d'acier 2, d'un tube de cuivre 3, d'une gaine isolante 4, d'un conducteur de retour 14 et d'une autre gaine isolante 16.

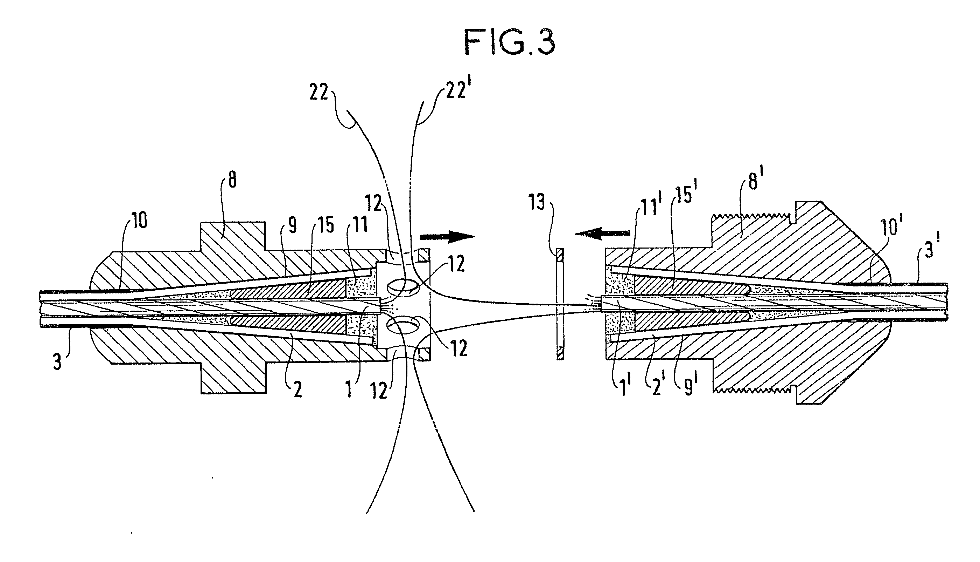

Dans la figure 3, la pièce d'ancrage 8 reçoit dans son alésage cylindrique 10, le tube de cuivre rétreint 3 et dans son alésage conique la voûte en fils d'acier 2 qui est épanouie par la pièce conique 15. Un moulage de fermeture 11 en résine synthétique durcissable remplit l'espace laissé libre par la pièce conique entre la voûte en fils d'acier 2 et le cœur optique 1.

Il en est de même pour la pièce d'ancrage 8' qui reçoit dans son alésage cylindrique 10' le tube de cuivre rétreint 3' et dans son alésage conique la voûte en fils d'acier 2' qui est épanouie par la pièce conique 15'. Un moulage de fermeture 11' en résine synthétique durcissable remplit l'espace laissé libre par la pièce conique entre la voûte en fils d'acier 2' et le cœur optique 1'.

Les fibres optiques 22 d'une extrémité du câble et les fibres optiques 22' de l'autre extrémité du câble traversent les lumières 12 de la pièce d'ancrage 8. Une rondelle 13 en matière élastomère s'interpose entre les extrémités des deux pièces de raccordement.

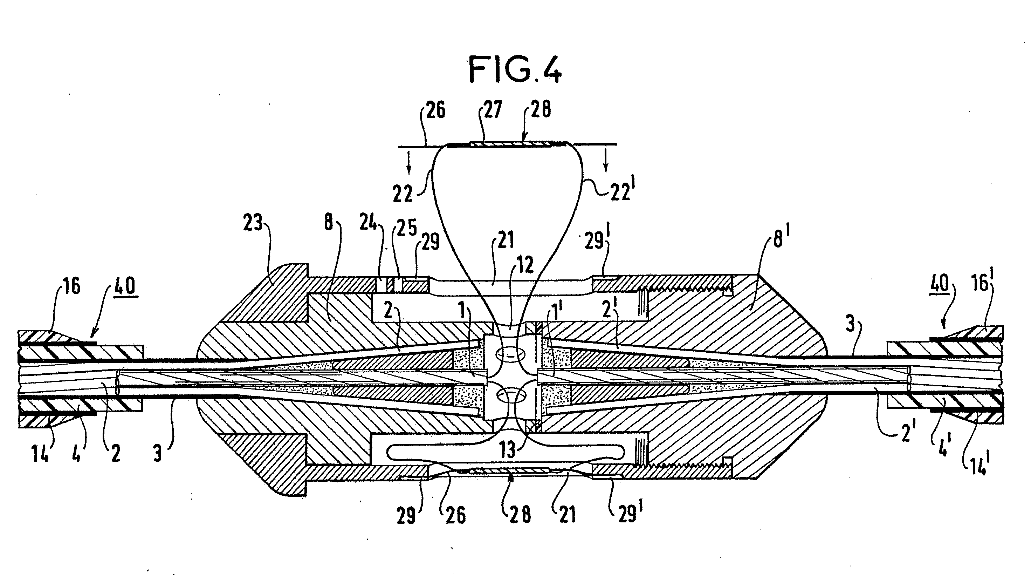

Dans la figure 4, le raccordement mécanique des deux pièces d'ancrage 8, 8' est réalisé par le tube interne 23, qui est vissé à une de ses extrémités sur la pièce d'ancrage 8'.

Le tube interne 23 vient en appui sur chaque pièce d'ancrage 8, 8' créant ainsi une double portée donc une difficulté d'usinage. La rondelle élastomère 13 supprime cet inconvénient.

Cette figure montre deux manchons 28, un en position de rubannage et un en position définitive à l'intérieur d'une lumière 21.

Chaque fibre optique 22 est raccordée une à une à chaque fibre optique 22', par un manchon de soudure 28. Ce manchon de soudure est fixé par un ruban 27 sur un fil support 26 puis l'ensemble support ainsi constitué est placé dans deux rainures 29, 29' usinées de chaque côté de chaque lumière 21.

Deux orifices 24 et 25 pratiqués dans le tube interne 23 servent au remplissage du tube par un produit hydrophobe tel que le polyisobutylène.

On voit aussi à l'extérieur et de chaque côté du tube interne, chaque extrémité du câble 40 comprenant une voûte en fils d'acier 2, 2', un tube de cuivre 3, 3', une gaine isolante 4, 4', un conducteur de retour 14, 14', une autre gaine isolante 16, 16'.

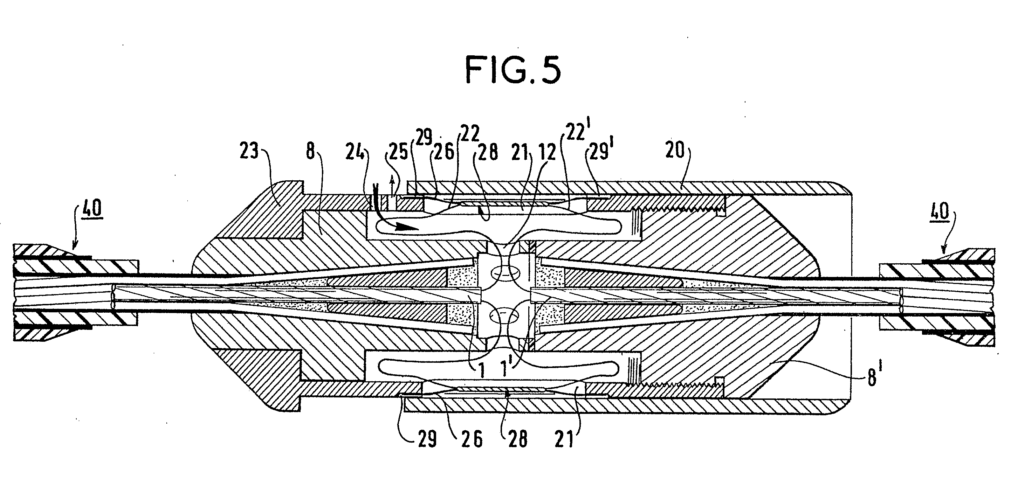

Dans la figure 5, le tube externe 20 recouvre partiellement le tube interne 23, en laissant libre les orifices 24 et 25.

L'orifice 24 sert au remplissage du polyisobutylène et l'orifice 25 sert à la mise à l'air libre évitant d'emprisonner des bulles d'air pendant le remplissage.

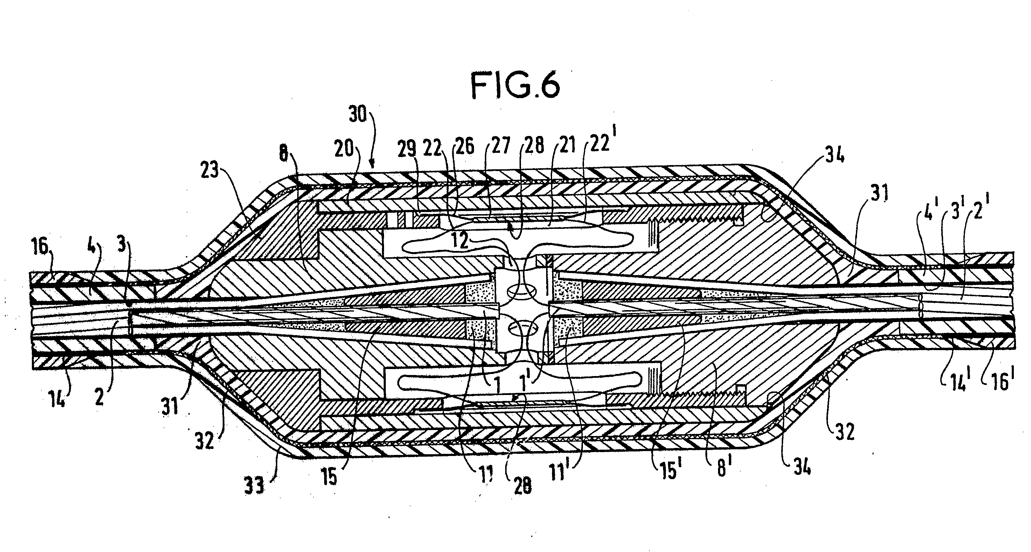

Dans la figure 6 le remplissage du polyisobutylène est terminé, le tube 20 recouvre donc totalement le tube interne 23. Ce tube 20 est immobilisé par des coups de pointeau 34.

Les gaines isolantes 4, 4′ sont raccordées par un moulage de fermeture en matière thermoplastique 31.

Les conducteurs de retour 14, 14′ sont raccordés par une tresse 32 en métal conducteur. Ce conducteur de retour ainsi reconstitué sert de mise à la terre pour protéger l'opérateur et sert également au retour des courants d'alimentation des répéteurs.

Les deux gaines de protection 16, 16′ sont raccordées par un manchon thermorétractable 33.

La fabrication du dispositif qui vient d'être décrit s'effectue comme suit :

a) on élimine dans la zone de jonction sur une longueur notablement supérieure à celle désirée pour ledit dispositif, le cœur optique 1, 1′, les fils d'acier formant voûte 2, 2′, le tube de cuivre rétreint 3, 3′ la gaine isolante 4, 4′, en laissant à nu les fibres optiques ;

b) on engage successivement sur les extrémités de chaque câble, les manchons extérieurs 18, 18′, le tube intérieur 23 sur l'extrémité d'un câble et le tube extérieur 20 sur l'extrémité de l'autre câble, puis les pièces d'ancrage 8, 8′ ;

c) on coupe les fils d'acier formant voûte 2, 2′ le tube de cuivre rétreint 3, 3′, la gaine isolante 4, 4′ à la longueur nécessaire à celle désirée pour le dispositif ;

d) on introduit dans l'alésage conique 9, 9′ des pièces d'ancrage, une certaine quantité de résine synthétique durcissable et on épanouit les extrémités des fils d'acier formant voûte à l'intérieur dudit alésage conique ;

e) on introduit les pièces coniques 15, 15′ d'épanouissement des fils d'acier de la voûte à l'intérieur des pièces d'ancrage, on réalise le remplissage de la totalité du volume compris entre les extrémités des fils d'acier et les pièces coniques d'épanouissement avec la résine synthétique puis on fait durcir la résine ;

f) on passe toutes les fibres optiques au travers des différentes lumières 12 pratiquées dans la pièce d'ancrage 8 ;

g) on réalise la jonction mécanique en ramenant le tube interne sur les deux pièces d'ancrage 8, 8′ et en le vissant à la pièce d'ancrage 8′ ;

h) on passe toutes les fibres optiques au travers des différentes lumières 21 ;

i) on soude les fibres optiques une à une et on protège les soudures par des manchons 28 puis on fixe ces manchons sur des fils support 26 par des rubans 27 ;

j) on place chaque fil support dans une rainure 21 ;

k) on ramène le tube externe 20 au niveau de l'orifice 25 ;

l) on remplit l'intérieur de ce tube par un produit hydrophobe tel que le polyisobutylène et on met en place définitivement le tube externe puis on l'immobilise par des corps de pointeau 34 ;

m) on raccorde les deux gaines isolantes 4, 4′ par un moulage thermoplastique 31 ;

n) on raccorde les conducteurs de retour à l'aide d'une tresse 32 en métal conducteur ;

o) on raccorde les deux gaines de protection 16, 16′ à l'aide d'un manchon thermorétractable 33 ;

p) on recouvre l'ensemble par deux manchons extérieurs 18, 18′ en matière synthétique.

Sans sortir du cadre de l'invention, les extrémités de câbles peuvent bien sûr ne pas comporter de conducteurs de retour.

**Revendications**

1. Dispositif de jonction des extrémités de deux câbles sous-marins à fibres optiques comprenant chacun des fibres optiques logées dans un cœur optique (1, 1′) sur lequel vient s'enrouler hélicoïdalement une voûte de fils d'acier (2, 2′), un tube en métal conducteur (3, 3′) rétreint sur la voûte, une gaine isolante (4, 4′) dispositif comprenant à chaque extrémité de câble :

a) une pièce d'ancrage (8, 8′) au moins en partie en métal de résistance mécanique élevée, percée du côté tourné vers l'autre extrémité de câble d'un alésage conique (9, 9′) pour le passage et le logement des extrémités de fils d'acier formant voûte, et du côté opposé, d'un alésage cylindrique (10, 10′) pour le logement du tube en métal conducteur ;

b) une bague conique (15, 15′) d'épanouissement et de maintien des fils d'acier formant voûte, percée d'un canal axial pour le passage du cœur optique ;

c) un remplissage en résine synthétique durcissable (11, 11′) occupant le volume libre entre la surface interne de la pièce d'ancrage et la surface externe de la bague conique, autour des extrémités des fils d'acier formant voûte, caractérisé en ce qu'au moins une pièce d'ancrage (8, 8′) possède des lumières (12) pour le passage des fibres optiques et en ce qu'il comprend également autour des pièces d'ancrage :

d) un tube interne (23) en métal de résistance mécanique élevée relié aux pièces d'ancrage (8, 8′) et percé en sa partie centrale par des lumières (21) ;

e) dans chaque lumière (21) du tube interne, un fil support (26) sur lequel se fixe un manchon de soudure (28) raccordant une à une les fibres optiques ;

f) un tube externe (20) recouvrant le tube interne.

2. Dispositif de jonction selon la revendication 1, caractérisé en ce que l'espace laissé libre à l'intérieur du tube externe est rempli d'un produit visqueux, de préférence du polyisobutylène.

3. Dispositif de jonction selon la revendication 1, caractérisé en ce que le tube intérieur est muni d'un orifice (24) permettant le remplissage, et d'un autre orifice (25) permettant la mise à l'air libre.

4. Dispositif de jonction selon la revendication 1, caractérisé en ce qu'un moulage de fermeture (31) en matière thermoplastique assure la liaison des deux gaines isolantes (4, 4').

5. Dispositif de jonction selon la revendication 1, dans lequel chaque câble comprend un conducteur de retour caractérisé en ce qu'il comprend une tresse (32) en métal conducteur assurant le raccordement des conducteurs de retour (14, 14').

6. Dispositif de jonction selon la revendication 1, dans lequel chaque câble comprend un conducteur de retour recouvert par une gaine de protection caractérisé en ce qu'il comprend un manchon thermorétractable (33) assurant le raccordement des gaines de protection (16, 16').

7. Dispositif de jonction selon la revendication 1, caractérisé en ce qu'il comprend deux manchons extérieurs (18, 18') en matière synthétique.

8. Procédé de fabrication d'un dispositif de jonction selon la revendication 1, dans lequel :

a) on élimine dans la zone de jonction sur une longueur notablement supérieure à celle désirée pour ledit dispositif, le cœur optique (1, 1'), les fils d'acier formant voûte (2, 2'), le tube de cuivre rétreint (3, 3') la gaine isolante (4, 4'), en laissant à nu les fibres optiques ;

b) on engage successivement sur les extrémités de chaque câble, les manchons extérieurs (18, 18'), le tube intérieur (23) sur l'extrémité d'un câble et le tube extérieur (20) sur l'extrémité de l'autre câble, puis les pièces d'ancrage (8, 8') ;

c) on coupe les fils d'acier formant voûte (2, 2') le tube de cuivre rétreint (3, 3'), la gaine isolante (4, 4') à la longueur nécessaire à celle désirée pour le dispositif ;

d) on introduit dans l'alésage conique (9, 9') des pièces d'ancrages, une certaine quantité de résine synthétique durcissable et on épanouit les extrémités des fils d'acier formant voûte à l'intérieur dudit alésage conique ;

e) on introduit les pièces coniques (15, 15') d'épanouissement des fils d'acier de la voûte à l'intérieur des pièces d'ancrage, on réalise le remplissage de la totalité du volume compris entre les extrémités des fils d'acier et les pièces coniques d'épanouissement avec la résine synthétique puis on fait durcir la résine, caractérisé en ce que :

f) on passe toutes les fibres optiques au travers des différentes lumières (12) pratiquées dans une pièce d'ancrage ;

g) on réalise la jonction mécanique en ramenant le tube interne (23) sur les deux pièces d'ancrage (8, 8') et en le vissant au moins à une desdites pièces ;

h) on passe toutes les fibres optiques au travers des différentes lumières (21) pratiquées dans la partie centrale du tube interne ;

i) on soude les fibres optiques une à une et on protège les soudures par des manchons (28) puis on fixe ces manchons sur des fils support (26) par des rubans (27) ;

j) on place chaque fil support dans des rainures extérieures (29) du tube interne chaque manchon se trouvant ainsi placé dans une lumière du tube interne ;

k) on ramène le tube externe (20) jusqu'au niveau des orifices de remplissage et de mise à l'air libre pratiqués dans le tube interne.

l) après un remplissage de l'espace laissé libre à l'intérieur du tube externe, on met définitivement en place ledit tube externe et on l'immobilise.

9. Procédé de fabrication d'un dispositif de jonction selon la revendication 8, caractérisé en ce que ledit remplissage se fait à l'aide d'un produit visqueux de préférence du polyisobutylène.

10. Procédé de fabrication d'un dispositif de jonction selon la revendication 8, caractérisé en ce que l'on raccorde les deux gaines isolantes (4, 4') par un moulage thermoplastique (31).

11. Procédé de fabrication d'un dispositif de jonction selon la revendication 8, dans lequel chaque câble comprend un conducteur de retour, caractérisé en ce que l'on raccorde les conducteurs de retour (14, 14') à l'aide d'une tresse (32).

12. Procédé de fabrication d'un dispositif de jonction selon la revendication 8, dans lequel chaque câble comprend un conducteur de retour recouvert par une gaine de protection, caractérisé en ce que l'on raccorde les deux gaines de protection (16, 16') à l'aide d'un manchon rétractable (33).

13. Procédé de fabrication d'un dispositif de jonction selon l'une des revendications 8 à 12, caractérisé en ce que l'on recouvre l'ensemble du dispositif par deux manchons extérieurs (18, 18') en matière synthétique.

**Claims**

1. A connection device for connecting the ends of two submerged optical fiber cables each comprising optical fibers located in an optical core (1, 1') on which an arch of steel wires (2, 2') is helically wound, a conductive metal tube (3, 3') swaged down on the arch, an insulating sheath (4, 4'), said device comprising, at each cable end :

a) an anchoring part (8, 8') which is at least partially made of a metal having high mechanical strength, supplied on the side turned towards the other end of the cable with a conical boring (9, 9') for the passage and the housing of the ends of steel wires forming arch, and on the opposed side with a cylindrical boring (10, 10') for the housing of the tube of conductive metal,

b) a conical ring (15, 15') for splaying and holding the archforming steel wires, having an axial channel for the passage of the optical core,

c) a filling of hardenable synthetic resin (11, 11') occupying the free space between the inner surface of the fixing part and the outer surface of the conical ring, surrounding the ends of the arch-forming wires, characterized in that at least one anchoring part (8, 8') possesses openings (12) for the passage of the optical fibers, and that it also comprises around the anchoring parts :

d) an inner tube (23) of a metal having high mechanical strength connected to the anchoring parts (8, 8') and provided with openings (21) in its central portion,

e) in each opening (21) of the inner tube, a support wire (26) on which is fixed a weld sleeve (28) connecting the optical fibers with each other,

f) an outer tube (20) covering the inner tube.

2. A connection device according to claim 1, characterized in that the space left free inside the outer tube is filled with a viscous substance, preferably polyisobutylene.

3. A connection device according to claim 1, characterized in that the inner tube is supplied with an orifice (24) permitting the filling, and with another orifice (25) permitting air ventilation.

4. A connection device according to claim 1, characterized in that a moulded seal (31) of thermoplastic material ensures the connection of the two insulating sheaths (4, 4').

5. A connection device according to claim 1, in which each cable comprises a return conductor, characterized in that it comprises a braid (32) of conductive metal ensuring the connection of the return conductors (14, 14').

6. A connecting device according to claim 1, in which each cable comprises a return conductor covered by a protective sheath, characterised in that it comprises a heat-shrinkable sleeve (33) ensuring the connection of the protective sheaths (16, 16').

7. A connection device according to claim 1, characterized in that it comprises two outer sleeves (18, 18') made of synthetic material.

8. A method for manufacturing a connection device according to claim 1, in which :

a) in the connection zone, over a length considerably longer than the length desired for said device, the optical core (1, 1'), the arch-forming steel wires (2, 2'), the swaged copper tube (3, 3'), the insulating sheath (4, 4') are stripped, leaving the optical fibers bare,

b) successively, the outer sleeves (18, 18') are threaded onto the ends of each cable, the inner tube (23) is threaded on the end of a cable and the outer tube (20) on the end of the other cable, and the anchoring parts (8, 8') are threaded,

c) the arch-forming steel wires (2, 2'), the swaged copper tube (3, 3'), the insulating sheath (4, 4') are cut to the length which is necessary for that length desired for the device,

d) a certain quantity of hardenable synthetic resin is introduced in the conical opening (9, 9') of the anchoring parts and the ends of the arch-forming steel wires are splayed out within said conical opening,

e) the conical parts (15, 15') for splaying out the steel wires of the arch are introduced into the fixing parts, the filling of the total space comprised between the ends of the steel wires and the conical splaying-out parts with the synthetic resin is carried out and then the resin is hardened, characterized in that

f) all optical fibers are passed through different holes in an anchoring part,

g) the mechanical connection is carried out by threading the inner tube (23) onto the two anchoring parts (8, 8') and screwing it at least on one of said parts,

h) all the optical fibers are passed through different holes (21) in the central part of the inner tube,

i) the optical fibers are welded one-to-one and the welds are protected by sleeves (28), then these sleeves are fixed on support wires (26) by tapes (27),

j) each support wire is placed in outer grooves (29) of the inner tube, each sleeve being thus placed in a hole of the inner tube,

k) the outer tube (20) is brought up to the level of the filling and venting orifices in the inner tube,

l) after filling the free space inside the outer tube, said outer tube is definitely brought into place and then immobilized.

9. A method for manufacturing a connection device according to claim 8, characterized in that said filling is carried out by means of a viscous substance, preferably polyisobutylene.

10. A method for manufacturing a connection device according to claim 8, characterized in that the two insulating sheaths are connected by means of a thermoplastic moulding.

11. A method for manufacturing a connection device according to claim 8, in which each cable comprises a return conductor, characterized in that the return conductors (14, 14') are connected by means of a braid (32).

12. A method for manufacturing a connection device according to claim 8, in which each cable comprises a return conductor covered by a protective sheath, characterized in that the two protective sheaths (16, 16') are connected by means of a shrinkeable sleeve (33).

13. A method for manufacturing a connection device according to one of claims 8 to 12, characterized in that the device as a whole is covered by two outer sleeves (18, 18') of synthetic material.

**Patentansprüche**

1. Verbindungsvorrichtung für die Enden zweier Unterwasser-Lichtleitfaserkabel, die je in einem optischen Kern (1, 1') untergebrachte Lichtleitfasern, wobei auf den Kern spiralförmig eine Bewehrung aus Stahldrähten (2, 2') aufgewickelt ist, ein auf die Bewehrung aufgeschrumpftes Rohr aus leitendem Metall (3, 3'), eine Isolierhülle (4, 4') aufweisen, wobei die Vorrichtung an jedem Kabelende aufweist :

a) ein Verankerungsstück (8, 8'), das zumindest zum Teil aus einem Metall mit erhöhtem mechanischem Widerstand besteht und auf der Seite, die zum anderen Kabelende zeigt, eine konische Bohrung (9, 9') zum Durchlaß und zur Aufnahme der Enden der die Bewehrung bildenden Stahldrähte sowie auf der entgegengesetzten Seite eine zylindrische Bohrung (10, 10') zur Aufnahme des Rohrs aus leitendem Metall aufweist,

b) einen, konischen Ring (15, 15') zur Auffächerung und zum Halten der die Bewehrung bildenden Stahldrähte, der einen axialen Kanal für den Durchlaß des optischen Kerns aufweist,

c) eine Füllung aus härtbarem synthetischem Harz (11, 11'), die den freien Raum zwischen der inneren Oberfläche des Verankerungsstücks und der äußeren Oberfläche des konischen Rings um die Enden der die Bewehrung bildenden Stahldrähte herum ausfüllt, dadurch gekennzeichnet, daß mindestens ein Verankerungsstück (8, 8') Öffnungen (12) für den Durchlaß der Lichtleitfasern aufweist und daß die Vorrichtung außerdem um die Verankerungsstücke herum aufweist :

d) ein inneres Rohr (23) aus einem Metall mit erhöhtem mechanischem Widerstand, das mit den Verankerungsstücken (8, 8') verbunden ist und in seinem zentralen Bereich Öffnungen (21) aufweist ;

e) in jeder Öffnung (21) des inneren Rohrs einen Trägerdraht (26), auf dem eine Lötmuffe (28) befestigt ist, die die Lichtleitfasern einzeln miteinander verbindet ;

f) ein äußeres Rohr (20), das das innere Rohr bedeckt.

2. Verbindungsvorrichtung nach Anspruch 1, dadurch gekennzeichnet, daß der freigelassene Raum im Inneren des äußeren Rohrs mit einem viskosen Produkt gefüllt ist, vorzugsweise mit Polyisobutylen.

3. Verbindungsvorrichtung nach Anspruch 1, dadurch gekennzeichnet, daß das innere Rohr eine Öffnung (24), die das Füllen ermöglicht, und eine andere Öffnung (25) aufweist, die die Belüftung ermöglicht.

4. Verbindungsvorrichtung nach Anspruch 1, dadurch gekennzeichnet, daß ein Verschlußguß (31) aus thermoplastischem Material die Verbindung der beiden Isolierhüllen (4, 4') bewirkt.

5. Verbindungsvorrichtung nach Anspruch 1, in der jedes Kabel einen Rückleiter aufweist, dadurch gekennzeichnet, daß sie ein Geflecht (32) aus leitendem Metall aufweist, das die Verbindung der Rückleiter (14, 14') herstellt.

6. Verbindungsvorrichtung nach Anspruch 1, in der jedes Kabel einen mit einer Schutzhülle versehenen Rückleiter aufweist, dadurch gekennzeichnet, daß sie eine wärmeschrumpfbare Muffe (33) aufweist, die die Verbindung der Schutzhüllen (16, 16') herstellt.

7. Verbindungsvorrichtung nach Anspruch 1, dadurch gekennzeichnet, daß sie zwei äußere Muffen (18, 18') aus Synthetikmaterial aufweist.

8. Verfahren zur Herstellung einer Verbindungsvorrichtung nach Anspruch 1, bei dem man :

a) auf eine Länge, die wesentlich größer ist als die für die Vorrichtung gewünschte Länge, den optischen Kern (1, 1'), die die Bewehrung bildenden Stahldrähte (2, 2'), das aufgeschrumpfte Kupferrohr (3, 3'), die isolierende Hülle (4, 4') entfernt und die Lichtleitfasern freiläßt ;

b) nacheinander auf die Enden jedes Kabels die äußeren Muffen (18, 18'), das innere Rohr (23) auf das Ende eines Kabels und das äußere Rohr (20) auf das Ende des anderen Kabels und dann die Verankerungsstücke (8, 8') aufbringt ;

. c) die die Bewehrung bildenden Stahldrähte (2, 2'), das aufgeschrumpfte Kupferrohr (3, 3'), die isolierende Hülle (4, 4') auf die Länge schneidet, die für die für die Vorrichtung gewünschte Länge notwendig ist ;

d) in die konische Öffnung (9, 9') der Verankerungsstücke eine gewisse Menge härtbaren synthetischen Harzes einfüllt und die Enden der die Bewehrung bildenden Stahldrähte im Inneren der konischen Öffnung auffächert ;

e) die konischen Stücke (15, 15') zur Auffächerung der Stahldrähte der Bewehrung ins Innere der Verankerungsstücke einführt, das Füllen der Gesamtheit des zwischen den Enden der Stahldrähte und den konischen Ausbreitungsstücken befindlichen Raums mit synthetischem Harz füllt und das Harz härten läßt ; dadurch gekennzeichnet, daß :

f) man alle Lichtleitfasern durch verschiedene Öffnungen (12) in einem Verankerungsstück führt ;

g) man die mechanische Verbindung dadurch herstellt, daß man das innere Rohr (23) auf die beiden Verankerungsstücke (8, 8') bringt und es mindestens auf eines der Stücke aufschraubt ;

h) man alle Lichtleitfasern durch verschiedene Öffnungen (21) im zentralen Teil des inneren Rohrs führt ;

i) man die Lichtleitfasern paarweise verlötet und die Lötstellen durch Muffen (28) schützt und dann diese Muffen auf Trägerdrähten (26) durch Bänder (27) befestigt ;

j) man jeden Stützdraht in äußere Nuten (29) des inneren Rohrs legt, wodurch sich jede Muffe in einer Öffnung des inneren Rohrs befindet ;

k) man das äußere Rohr bis auf die Höhe der Einfüll- und Belüftungsöffnungen im inneren Rohr zurückbringt,

l) man nach einem Füllen des im Inneren des äußeren Rohrs freigelassenen Raums das äußere Rohr endgültig einsetzt und festlegt.

9. Verfahren zur Herstellung einer Verbindungsvorrichtung nach Anspruch 8, dadurch gekennzeichnet, daß das Füllen mithilfe eines viskosen Produkts geschieht, vorzugsweise mit Polyisobutylen.

10. Verfahren zur Herstellung einer Verbindungsvorrichtung nach Anspruch 8, dadurch gekennzeichnet, daß man die beiden isolierenden Hüllen (4, 4') durch ein thermoplastisches Gießen (31) verbindet.

11. Verfahren zur Herstellung einer Verbindungsvorrichtung nach Anspruch 8, bei dem jedes Kabel einen Rückleiter aufweist, dadurch gekennzeichnet, daß man die Rückleiter (14, 14') mithilfe eines Geflechts (32) verbindet.

12. Verfahren zur Herstellung einer Verbindungsvorrichtung nach Anspruch 8, bei dem jedes Kabel einen mit einer Schutzhülle bedeckten Rückleiter aufweist, dadurch gekennzeichnet, daß man die zwei Schutzhüllen (16, 16') mithilfe einer schrumpfbaren Muffe (33) verbindet.

13. Verfahren zur Herstellung einer Verbindungsvorrichtung nach einem der Ansprüche 8 bis 12, dadurch gekennzeichnet, daß man die Gesamtheit der Vorrichtung mit zwei äußeren Muffen (18, 18') aus Synethikmaterial bedeckt.

# FIG.1

# FIG.2

0 091 632

FIG.3

FIG.4

FIG.5

FIG.6